# EUROPÄISCHE PATENTSCHRIFT

(11) **EP 1 281 373 B1**
(45) Veröffentlichungstag und Bekanntmachung des Hinweises auf die Patenterteilung: **29.03.2006**
(21) Anmeldenummer: 01118499.1
(22) Anmeldetag: 01.08.2001
(51) Int. Cl.: A61C 19/02

(54) **System zur Darbietung von dentalen Gerätschaften und/oder zum Anmischen von dentalen Substanzen**
System for displaying dental instruments and/or for mixing dental substances
Système de présentation d'instruments dentaires et/ou pour mélanger des substances dentaires-

(43) Veröffentlichungstag der Anmeldung: 05.02.2003
(73) Patentinhaber: Top Caredent AG, 8047 Zürich (CH)
(72) Erfinder: Stieger, Peter, Dr. med. Dent., 9000 St. Gallen (CH); Bättig, Curt, 8047 Zürich-Adliswil (CH)
(74) Vertreter: Weiss, Peter

(56) Entgegenhaltungen:
- EP-A- 0 967 848
- EP-A- 1 147 749
- DE-A- 10 017 956
- US-A- 5 106 297
- US-A- 5 174 453

## Beschreibung

Die Erfindung betrifft ein System zur Bearbeitung von dentalen Gerätschaften und/oder zum Anmischen von dentalen Substanzen, die in einem Display angeordnet sind, der zumindest einen ggf. austauschbaren Einsatz für die dentalen Gerätschaften aufweist.

Beim Zahnarzt oder in einem zahntechnischen Labor gibt es eine Vielzahl von dentalen Gerätschaften, die meist einzeln entweder in einer Schublade liegen oder von der Helferin dem Zahnarzt dargeboten werden. Auch zum Anmischen von dentalen Substanzen, wie bspw. von Kompositen für Füllungen, gibt es wiederum eine Vielzahl von entsprechenden Gerätschaften, die vom Zahnarzt bzw. Zahntechniker einzeln je nach Anforderung zusammengesucht und zusammengestellt werden. Hierdurch geht dem Zahnarzt bzw. Zahntechniker erhebliche Zeit verloren, ferner findet der Zahnarzt bzw. Zahntechniker nicht immer die richtige Gerätschaft bzw. die richtige Grundsubstanz für den gerade benötigten Zweck.

Aus der US 5 174 453 ist ein System zur Darbietung von chirurgischen Instrumenten bekannt, welches zerlegbar ist und einen Einsatz für die chirurgischen Instrumente aufweist.

Der vorliegenden Erfindung liegt die Aufgabe zugrunde, ein System der o. g. Art zu entwickeln, welches dem Zahnarzt bzw. Zahntechniker nicht nur entsprechende Instrumente anbietet, sondern auch ein unabhängiges und übersichtliches Arbeiten erlaubt.

Zur Lösung dieser Aufgabe führt; dass in dem Display eine Dunkelkammer integriert ist.

Sehr viele dentale Substanzen sollten nach dem Anmischen im Dunkeln gehalten werden, damit die verschiedenen Komponenten nicht sofort reagieren. Der erfindungsgemässe Display besitzt eine derartige, sehr einfach ausgestaltete Dunkelkammereinrichtung, so dass der Zahnarzt bspw. nach dem Anmischen einer bestimmten Substanz noch einen anderen Arbeitsschritt am Patienten durchführen kann, ohne dass die angemischte Substanz bereits so reagiert hat, dass sie vom Zahnarzt nicht mehr benutzt werden kann.

In einem bevorzugten Ausführungsbeispiel besitzt das Display ein U-förmiges Grundgestell aus einem Boden und davon aufragenden Seitenwände. Aus diesen Seitenwänden sind in den freien Randkanten Stecklaschen ausgeformt, die es erlauben, dass auf das Grundgestell eine Schale aufsetzbar ist. Dabei durchgreifen die Stecklaschen Schlitze in dieser Schale und bilden gleichzeitig im Inneren der Schale weitere Abtrennungen für bestimmte Aufnahmeräume. Dementsprechend ist natürlich auch die Einstecktiefe für die Stecklaschen begrenzt, so dass die Stecklaschen nicht zu weit über den Schalenboden hinausragen.

Die Schale selbst weist zwei sich gegenüberliegende Seitenwände, eine Oberwand und eine Frontwand auf. Etwa parallel zu den Seitenwänden verlaufen die aus dem Schalenboden herausragenden Stecklaschen.

Auf die Stecklaschen kann nun ein Einsatz für dentale Gerätschaften aufgesetzt werden. Dieser Einsatz besitzt wiederum bevorzugt zwei Seitenwände, welche die Stecklaschen seitlich übergreifen. Ferner besitzt der Einsatz eine nach unten abragende. Rückwand, die zwischen die Randkanten der oberen Stecklaschen und die Oberwand der Schale eingeschoben wird. Hierdurch wird gewährleistet, dass der Einsatz nicht entlang den Stecklaschen verschoben werden kann.

Der Einsatz selbst besitzt Bohrungen od. dgl. zur Aufnahme von geeigneten Tupfern oder Pinseln oder anderen dentalen Gerätschaften. Bevorzugt wird dem Zahnarzt bzw. Zahntechniker ein ganzes Sortiment an entsprechenden dentalen Gerätschaften dargeboten.

Dem Einsatz können ferner auch Schlitze eingeformt sein, in die ein Bohrständer gesteckt wird. Dieser Bohrständer dient der Halterung von entsprechenden dentalen Bohrern, Polier oder anderen Gerätschaften. Hier soll dem Erfindungsgedanken keine Grenze gesetzt sein.

Die Stecklaschen erlauben auch eine sehr einfache Ausgestaltung der Dunkelkammereinrichtung. zwischen die beiden unteren Stecklaschen kann ein Schieber eingesetzt werden, der schwarz eingefärbt ist. Der von dem Schieber überdeckte Bereich des Schalenbodens ist ebenfalls schwarz eingefärbt und ferner auch der entsprechende Bereich der Frontwand. Der Schieber selbst weist eine der Frontwand gegenüberliegende Abschlusswand auf, so dass insgesamt mittels des Schiebers eine öffenbare Dunkelkammer gebildet wird. In diese Dunkelkammer kann nun eine Einweg-Mischpalette eingesetzt werden, welche muldenförmige Ausnehmungen besitzt. In diesen muldenförmigen Ausnehmungen kann bei geöffnetem Schieber die entsprechende dentale Mischung angerichtet werden. Sobald sie angerichtet ist, kann der Zahnarzt mit dem kleinen Finger den Schieber schliessen und so die Dunkelkammer herstellen. Sobald er die Mischung braucht, öffnet er mit dem kleinen Finger wieder die Dunkelkammer, indem er den Schieber nach oben unter den Einsatz verschiebt und entnimmt der Mischpalette die benötigte Substanz mittels des Pinsels oder Tupfers.

Wie oben erwähnt, werden durch die Stecklaschen links und rechts neben dem Einsatz Aufnahmeräume für bspw. Behälter für dentale Substanzen oder aber auch dentale Geräte gebildet. Um den Zugriff zu den dentalen Geräten zu erleichtern, wird in eine Aufnahme eine Platte eingelegt, die länger als die Aufnahme ist, wobei ein hinteres Ende der Platte in der Aufnahme selbst ruht, während ein vorderes Ende auf der Randkante der Frontwand der Schale aufliegt und über diese hinausragt. Hierdurch wird ein Zugriff zu dem dentalen Gerät wesentlich erleichtert. Damit die Platte nicht aus der Aufnahme herausrutscht, ist ein Stopper vorgesehen, der von innen her an die Frontwand anschlägt.

In einem einfachen Ausführungsbeispiel können Dunkelkammereinrichtung, Einsatz zur Aufnahme der Steckstifte und Aufnahmen zur Lagerung der Gerätschaften in einer einfachen Schale angeordnet sein. Diese wird durch einen bevorzugt durchsichtigen Schiebedeckel verschlossen, der so gewählt ist, dass er gleichzeitig auch der Halterung der Steckstifte dient.

Dieser Display hat auch den Vorteil, dass der Zahnarzt auf einen Blick die benötigten Gerätschaften im Auge hat und auswählen kann, was er für einen bestimmten Zweck benötigt. Das erfindungsgemässe System ist ein umfassendes Ordnungssystem, das dem Zahnarzt bzw. Zahntechniker erhebliche Zeit erspart. Die wichtigsten Arbeitsmaterialien sind in unmittelbarere Reichweite. Ferner erlaubt die gesamte Anordnung dem Zahnarzt bzw. Zahntechniker im wesentlichen ein Arbeiten mit nur einer Hand, was in vielen Fällen erwünscht ist.

Bevorzugt soll der Display zerlegbar ausgestaltet sein. Dies bedeutet, dass ein Reinigen des Displays und insbesondere auch ein Sterilisieren wesentlich erleichtert ist.

Des weiteren soll der Display zumindest einen austauschbaren Einsatz für dentale Gerätschaften beinhalten. In einem bevorzugten Ausführungsbeispiel der Erfindung ist der Einsatz bereits mit den dentalen Gerätschaften bestückt, so dass der Zahnarzt, sofern er andere dentale Gerätschaften benötigt, diesen Einsatz auf einfache Art und Weise austauschen kann. Ebenfalls ist ein einfacher Austausch gegen einen neuen Einsatz möglich, sofern die benötigten Gerätschaften aufgebraucht sind.

Durch dieses System wird eine Arbeitsmöglichkeit für einen Zahnarzt bzw. Zahntechniker geschaffen, das ein unabhängiges und übersichtliches Arbeiten erlaubt. Der Arbeitsplatz ist effizient organisiert und klar durchdacht. Das wichtigste Arbeitsmaterial ist in unmittelbarer Reichweite, übersichtlich geordnet und verhindert ein langes Suchen. Ferner erlaubt diese Anordnung, dass ein Zahnarzt auch alleine ohne Helferin arbeitet, da er bei den wichtigsten Handgriffen nur eine Hand benötigt. Das gesamte System ist einfachst zu reinigen und zu desinfizieren, da es komplett auseinander genommen werden kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht eines erfindungsgemässen Systems zur Darbietung von dentalen Gerätschaften und/oder zum Anmischen von dentalen Substanzen;
Figur 2 Teile des Systems gemäss Figur 1 in Seitenansicht und in Explosionsdarstellung;
Figur 3 eine Draufsicht auf ein Grundgestell des Systems gemäss Figur 1;
Figur 4 eine Draufsicht auf eine auf das Grundgestell aufsetzbare Schale des Systems gemäss Figur 1;
Figur 5 eine Draufsicht auf eine Platte zum Einlegen in die Schale gemäss Figur 4;
Figur 6 eine Draufsicht auf einen erfindungsgemässen Einsatz in die Schale gemäss Figur 4;
Figur 7 eine Draufsicht auf einen Bohrständer;
Figur 8 eine Draufsicht auf einen Schieber zum Bilden einer Dunkelkammer;
Figur 9 eine Draufsicht auf eine Anmisch-Palette mit Mulden zum Anmischen einer dentalen Substanz;
Figur 10 eine Draufsicht auf ein dentales Gerät;
Figur 11 eine Draufsicht auf ein weiteres Ausführungsbeispiel eines Systems zur Darbietung von dentalen Gerätschaften und/oder zum Anmischen von dentalen Substanzen.

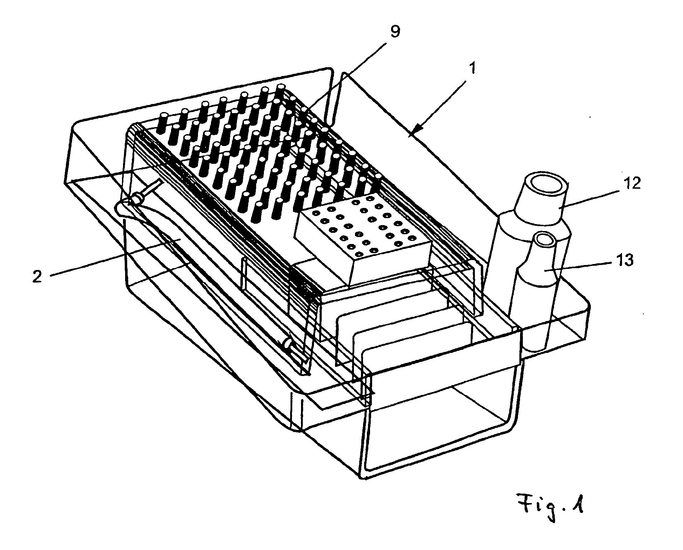

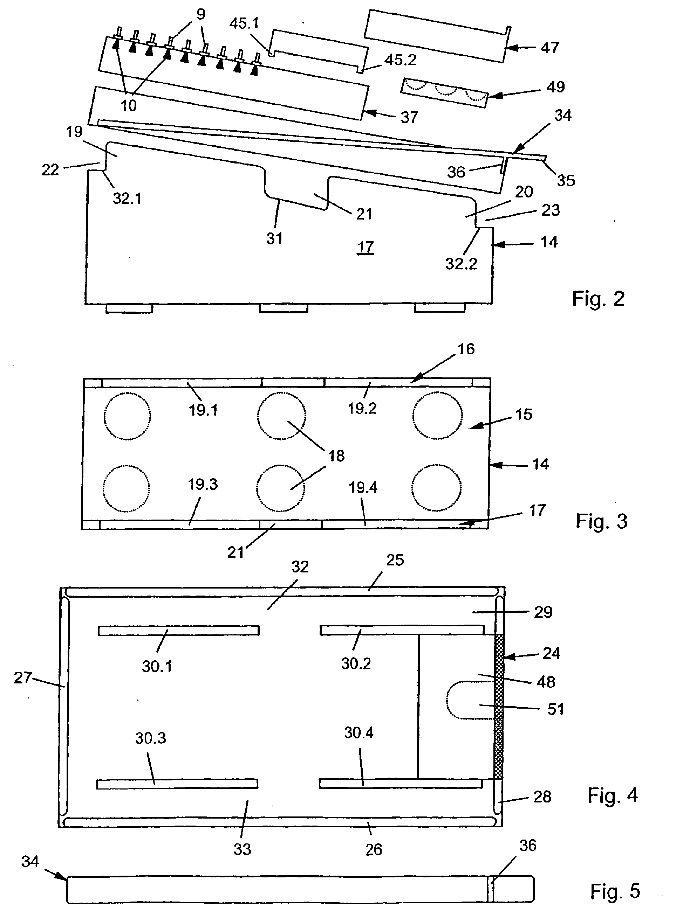

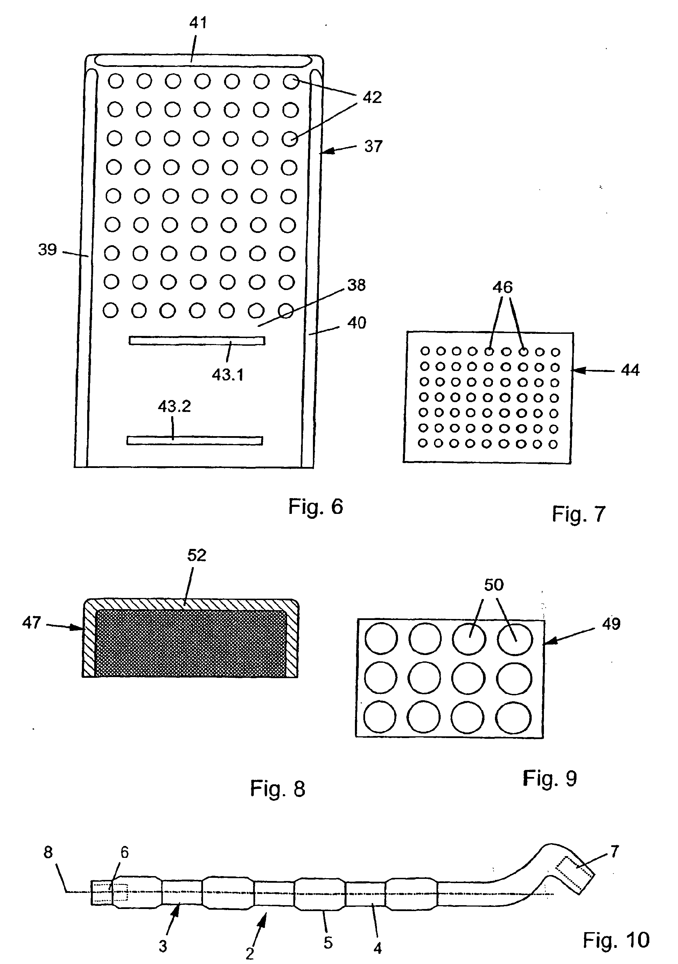

Gemäss Figur 1 dient ein erfindungsgemässes System 1 der Darbietung von dentalen Gerätschaften. Gezeigt ist hier ein Halter 2, der in Figur 10 näher dargestellt ist. Dieser Halter 2 besitzt einen Schaft 3 mit entsprechenden Griffmulden 4 und Grifferhöhungen 5. Beidends sind in den Schaft 3 jeweils Sacklöcher 6 und 7 eingeformt, wobei das Sackloch 6 etwa in Richtung einer Längsachse 8 des Halters 2 verläuft, während der Schaft 3 im Bereich des Sackloches 7 abgekröpft ist, so dass das Sackloch 7 in einem spitzen Winkel zu der Längsachse 8 verläuft. Beide Sacklöcher 6 und 7 dienen der Aufnahme von Steckstiften 9, an denen sich Tupfer oder Pinsel 10 (Figur 2) befinden.

In dem erfindungsgemässen System ist ferner eine Dunkelkammer 11 vorgesehen, die näher unten beschrieben wird und in der entsprechende dentale Substanzen angemischt werden. Die Grundsubstanzen für die dentalen Substanzen befinden sich in Flaschen 12 und 13.

Das gesamte System ist bevorzugt zerlegbar ausgestaltet. Getragen wird es gemäss den Figuren 2 und 3 von einem Uförmigen Grundgestell 14, welches aus einer Bodenplatte 15 und seitlich davon aufragenden Seitenwangen 16 und 17 besteht. Die Bodenplatte 15 ist von Gumminoppen 18 unterlegt, damit das gesamte System rutschfest auf einer Oberfläche aufgestellt werden kann.

Aus den Randkanten der Seitenwangen 16 und 17 sind jeweils zwei Stecklaschen 19.1, 19.2, 19.3, 19.4 herausgeformt. Zwischen den jeweils beiden Stecklaschen 19.1, 19.2 bzw. 19.3, 19.4 befindet sich eine Einformung 21, ferner sind jeweils anderenends der Einformung 21 Ecksicken 22 und 23 vorgesehen.

Auf das Grundgestell 14 kann eine Schale 24 aufgesetzt werden. Diese weist gemäss Figur 4 zwei Seitenwände 25 und 26 sowie eine Oberwand 27 und Frontwand 28 auf. Die Seitenwände 25 und 26, die Oberwand 27 und die Frontwand 28 umlaufen zusammen einen Schalenboden 29, in den Schlitze 30.1 bis 30.4 eingeformt sind. In Gebrauchslage werden die Stecklaschen 19.1 bis 19.4 durch die Schlitze 30.1 bis 30.4 hindurchgesteckt, bis ein Boden 31 der Einformung 21 sowie eine Kante 32.1 und 32.2 der Ecksicken 22 und 23 jeweils einer Unterfläche der Schale 24 anliegen. In dieser Gebrauchslage ragen die Stecklaschen 19.1 bis 19.4 aus den Schlitzen 30.1 bis 30.4 heraus und trennen von der Schale 24 zwei seitliche Aufnahmen 32 und 33 ab. Zumindest in eine dieser Aufnahmen 32 bzw. 33 kann eine in Figur 5 gezeigte Platte 34 eingelegt werden, welche länger als die Aufnahme 32 bzw. 33 ist, sodass sie, wie in Figur 2 gezeigt, schräg durch die Aufnahme 32 bzw. 33 verläuft und mit einem Endstück 35 aus der Aufnahme herausschaut.

Damit die Platte 34 nicht aus der Ausnahme 32 bzw. 33 herausrutscht, ist ein Stopper 36 vorgesehen, der innen an der Frontwand 28 anschlägt.

Auf die aus den Schlitzen 30.1 bis 30.4 herausschauenden Stecklaschen 19.1 bis 19.4 wird, die Stecklaschen 19.1 bis 19.4 teilweise übergreifend, ein Einsatz 37 aufgesetzt. Gemäss Figur 6 ist dieser Einsatz 37 ähnlich einem umgedrehten U geformt und besitzt eine Oberfläche 38, von der seitlich nach unten zwei Seitenwände 39 und 40 sowie eine Rückwand 41 abragen. Auch die Rückwand 41 übergreift die Stecklaschen 19.1 und 19.3, so dass der Einsatz 37 unverschiebbar auf den Stecklaschen festsitzt.

In die Oberfläche 38 sind Löcher 42 zur Aufnahme der oben erwähnten Steckstifte 9 sowie Schlitze 43.1 und 43.2 eingeformt. In diese Schlitze kann ein in Figur 7 angedeuteter Bohrständer 44 eingesetzt werden, wobei entsprechende Füsschen 45.1 und 45.2 (siehe Figur 2) in die Schlitze 43.1 und 43.2 eingreifen. Im Bohrständer 44 selbst befinden sich Bohrungen 46 zur Aufnahme von nicht näher gezeigten dentalen Bohrern od. dgl..

Zur Ausbildung der oben erwähnten Dunkelkammer 11 wird zwischen die beiden Stecklaschen 19.2 und 19.4 ein schwarz eingefärbter und in Figur 8 angedeuteter Schieber 47 eingesetzt. Dieser Schieber 47 kann im Bereich zwischen den beiden Stecklaschen 19.2 und 19.4 verschoben werden, so dass ein ebenfalls schwarz eingefärbter Bereich 48 (siehe Figur 4) freigegeben wird, in dem eine Anmisch-Palette 49 (siehe Figur 9) mit Mulden 50 angeordnet werden kann. In diesen Mulden 50 kann eine dentale Masse angemischt werden.

Nachdem die dentale Masse angemischt ist, kann die Anmisch-Palette 49 durch eine mit einem flexiblen Werkstoff od. dgl. verschlossene Grifföffnung 51, die in Figur 4 nur gestrichelt angedeutet ist, angehoben und aus dem Bereich 48 entfernt werden.

Zur Bildung einer geschlossenen Dunkelkammer ist die Frontwand 28 im Bereich 48 ebenfalls dunkel eingefärbt. Ferner weist der Schieber eine rückwärtige Abschlusswand 52 auf, die ebenfalls dunkel eingefärbt ist.

Die Funktionsweise der vorliegenden Erfindung ist folgende:

Zum Reinigen und insbesondere zum Sterilisieren kann das gesamte System auseinander genommen werden. Es besteht bevorzugt in seinen wesentlichen Teilen aus durchsichtigem Kunststoff und ist bspw. im Spritzgiessverfahren hergestellt. Die einzelnen Teile sind das Grundgestell 14, die Schale 24, die Platte 34, der Einsatz 37, der Schieber 47, der Bohrständer 44 und die Anmisch-Palette 49.

Nach dem Reinigen und Sterilisieren wird zuerst die Schale 24 auf das Grundgestell 14 aufgesetzt. Dabei durchgreifen die Stecklaschen 19.1 bis 19.4 die Schlitze 30.1 bis 30.4 und ragen von dem Schalenboden 29 im Inneren der Schale 24 auf.

Zwischen die Stecklaschen 19.2 und 19.4 wird nun der Schieber 47 eingesetzt, wobei er den schwarz eingefärbten Bereich 48 und die Grifföffnung 51 übergreift. Auf diese Weise ist eine geschlossene Dunkelkammer ausgebildet.

Als nächstes wird der Einsatz 37 auf die Stecklaschen 19.1 bis 19.4 aufgesetzt, wobei die Rückwand 41 des Einsatzes 37 zwischen die Oberwand 27 der Schale 24 und die Stecklaschen 19.1 und 19.3 eingreift. Bevorzugt wird der Einsatz 37 vor dem Aufsetzen auf die Stecklaschen 19.1 bis 190.4 mit den entsprechenden Steckstiften 9 mit Pinsel 10 und Tupfer bestückt.

Auf den Einsatz 37 kann dann noch der Bohrständer 44 aufgesetzt werden, der ebenfalls mit entsprechenden dentalen Bohrern bestückt ist.

In die Aufnahme 32 oder 33 wird die Platte 35 eingelegt, auf welche dann bspw. ein Halter 2 aufgelegt werden kann. Die Platte 34 erleichtert wesentlich den Zugriff zu dem Halter 2, da dieser nicht zu tief in der Aufnahme 32 bzw. 33 liegt und ferner nicht in Eckbereiche von Seitenwand 26 bzw. Oberwand 27 oder Frontwand 28 verrutschen kann. In die andere Aufnahme werden bevorzugt Flaschen oder Behälter mit dentalen Substanzen eingestellt.

Zum Anmischen einer dentalen Substanz wird der Schieber 47 zwischen den Stecklaschen 19.2 und 19.4 nach oben verschoben, so dass der Bereich 48 freigegeben wird. In dem Bereich 48 wird dann die Palette 49 eingesetzt und in den Mulden 50 mittels eines entsprechenden dentalen Werkzeuges eine dentale Masse angemischt. Der behandelnde Arzt kann dann den Halter 2 aus der Aufnahme 32 bzw. 33 entnehmen und mit nur einer Hand einen Steckstift 9 in den Halter 2 einsetzen. Mittels des Tupfers oder Pinsels entnimmt er dann aus der Mulde 50 der Palette 49 die angemischte dentale Masse und kann diese auf oder in Zähne des Patienten auf- bzw. einbringen.

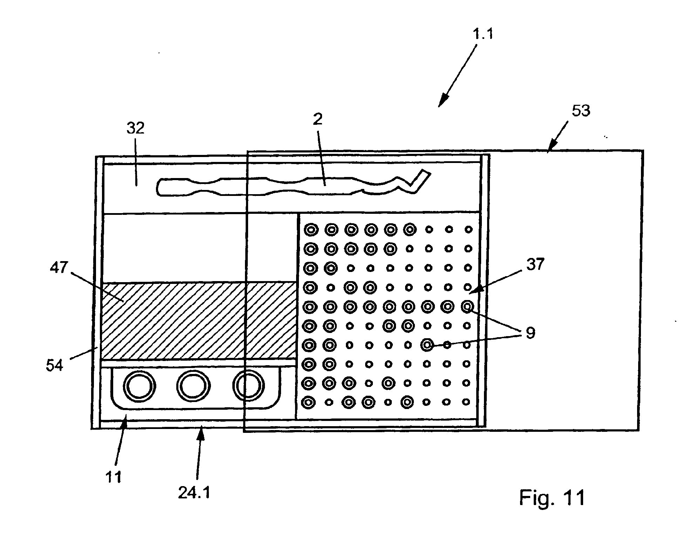

In Figur 11 ist ein weiteres Ausführungsbeispiel eines erfindungsgemässen Systems 1.1 zur Bearbeitung von dentalen Gerätschaften und/oder zum Anmischen von dentalen Substanzen gezeigt. Hierbei ist eine Schale 24.1 vorgesehen, welche allerdings nicht in ein Grundgestell eingesetzt wird, sondern von einem durchsichtigen Schiebedeckel 53 verschlossen werden kann. Ansonsten befindet sich in der Schale 24.1 auch die Aufnahme 32 für den Halter 2 sowie der Einsatz 37 für die Steckstifte 9. Ferner ist zwischen dem Einsatz 37 und einer Wand 54 die oben beschriebende Dunkelkammereinrichtung 11 angeordnet, wobei der Schieber 47 teilweise geöffnet dargestellt ist.

## Patentansprüche

1. System zur Bearbeitung von dentalen Gerätschaften (2, 9, 10, 44) und/oder zum Anmischen von dentalen Substanzen (12, 13), die in einem Display angeordnet sind, der zumindest einen ggf. austauschbaren Einsatz (37) für die dentalen Gerätschaften (9, 10, 44) aufweist,
**dadurch gekennzeichnet,**
**dass** in dem Display eine Dunkelkammer integriert ist.

2. System nach Anspruch 1, **dadurch gekennzeichnet, dass** der Einsatz (37) einen Abstand zu einer Wand (28) einhält, in dessen Bereich (48) sich die Dunkelkammereinrichtung (11) befindet.

3. System nach Anspruch 2, **dadurch gekennzeichnet, dass** in dem Bereich (48) ein Schieber (47) eingesetzt ist, dieser den Einsatz (37) untergreift und seitlich von Stecklaschen (19.2, 19.4) geführt ist.

4. System nach Anspruch 3, **dadurch gekennzeichnet, dass** der Schieber (47) umgedreht U-förmig gekrümmt ausgebildet, zur Frontwand (28) einer Schale (24) hin offen und gegenüberliegend durch eine Abschlusswand (52) verschlossen ist.

5. System nach Anspruch 3 oder 4, **dadurch gekennzeichnet, dass** dem Schieber (47) ein Griffstreifen angeformt ist.

6. System nach Anspruch 4 oder 5, **dadurch gekennzeichnet, dass** der Schieber (47), der vom Schieber überdeckte Bereich (48) der Schale (24) und der entsprechende Bereich der Frontwand (28) aus einem lichtdichten Werkstoff bestehen und/oder mit einer lichtdichten Beschichtung belegt sind.

7. System nach wenigstens einem der Ansprüche 1 bis 6, **dadurch gekennzeichnet, dass** bevorzugt ein- oder beidseits neben dem Einsatz (37) bzw. den Stecklaschen (19.1 bis 19.4) in der Schale (24) Aufnahmen (32,33) für dentale Geräte (2) und/oder Behälter (12, 13) mit dentalen Massen ausgebildet sind.

8. System nach Anspruch 7, **dadurch gekennzeichnet, dass** in zumindest eine Aufnahme (32, 33) eine Platte (34) eingelegt ist, welche einerseits in der Aufnahme liegt und andererseits über die Aufnahme, aufliegend auf einer Randkante der Frontwand (28), hinausragt.

9. System nach Anspruch 8, **dadurch gekennzeichnet, dass** nahe der Randkante der Frontwand (28) von der Platte (34) ein Stopper (36) in die Aufnahme (32, 33) einragt.

10. System nach wenigstens einem der Ansprüche 1 bis 9, **dadurch gekennzeichnet, dass** das Display zur Aufnahme der Gerätschaften (2, 9, 10, 44) und/oder Substanzen (12, 13) eine Schale (24, 24.1) aufweist.

11. System nach wenigstens einem der Ansprüche 1 bis 10, **dadurch gekennzeichnet, dass** das Display ein U-förmiges Grundgestell (14) aufweist, wobei aus den freien Randkanten Stecklaschen (19.1 bis 19.4) herausgeformt sind.

12. System nach Anspruch 11, **dadurch gekennzeichnet, dass** auf das Grundgestell (14) die Schale (24) aufsetzbar ist, welche im Schalenboden (28) Schlitze (30.1 bis 30.4) aufweist, welche nach dem Aufsetzen auf das Grundgestell (14) von den Stecklaschen (19.1 bis 19.4) durchdrungen sind.

13. System nach Anspruch 12, **dadurch gekennzeichnet, dass** die Schale (24) zwei Seitenwände (25, 26) eine Ober- und eine Frontwand (28, 28) aufweist.

14. System nach Anspruch 12 oder 13, **dadurch gekennzeichnet, dass** zumindest ein Einsatz (37) für die dentalen Gerätschaften (9, 10, 44) auf die aus den Schlitzen (30.1 bis 30.4) der Schale (24) in deren Innere herausragenden Stecklaschen (19.1 bis 19.4) aufsetzbar ist.

15. System nach Anspruch 14, **dadurch gekennzeichnet, dass** der Einsatz (37) mit zwei Seitenwänden (38, 40) die Stecklaschen (19.1 bis 19.4) seitlich und mit einer Rückwand (41) zwischen der Oberwand (27) der Schale (24) und den Stecklaschen (19.1 bis 19.4) diese übergreift.

16. System nach Anspruch 14 oder 15, **dadurch gekennzeichnet, dass** der Einsatz (37) Ausnehmungen, (42, 43.1, 43.2) zur Halterung der dentalen Gerätschaften (9, 10, 44) aufweist.

17. System nach einem der Ansprüche 14 bis 16, **dadurch gekennzeichnet, dass** der Einsatz (37) Schlitze (43.1, 43.2) zur Aufnahme von Füssen (45.1, 45.2) eines sterilisierbaren Bohrständers (44) aufweist.

18. System nach wenigstens einem der Ansprüche 10 bis 17, **dadurch gekennzeichnet, dass** die Schale (24.1) von einem bevorzugt durchsichtigen Deckel verschliessbar ist.

19. System nach wenigstens einem der Ansprüche 1 bis 18, **dadurch gekennzeichnet, dass** das Display insgesamt zerlegbar ist.

## Claims

1. System for the arrangement of dental instruments (2, 9, 10, 44) and/or for the mixing of dental substances (12, 13), which are disposed in a display which has at least one possibly interchangeable insert (37) for the dental instruments (9, 10, 44), **characterised in that** a darkroom is incorporated in the display.

2. System according to claim 1, **characterised in that** the insert (37) has a spacing from a wall (28), in the region (48) of which the darkroom device (11) is situated.

3. System according to claim 2, **characterised in that** a slide member (47) is inserted in the region (48), said slide member engages beneath the insert (37), and it is laterally guided by insertable lugs (19.2, 19.4).

4. System according to claim 3, **characterised in that** the slide member (47) has a curved configuration when pivoted in a U-shape, is open towards the front wall (28) of a tray (24) and is closed by an end wall (52) so as to lie opposite thereto.

5. System according to claim 3 or 4, **characterised in that** a gripper strip is fitted on the slide member (47).

6. System according to claim 4 or 5, **characterised in that** the slide member (47), the region (48) of the tray (24) covered by the slide member and the corresponding region of the front wall (28) are formed from an opaque material and/or are coated with an opaque covering.

7. System according to at least one of claims 1 to 6, **characterised in that**, preferably at one end or both ends adjacent the insert (37) or respectively the insertable lugs (19.1 to 19.4) in the tray (24), receiving means (32, 33) are provided for the accommodation of dental instruments (2) and/or containers (12, 13) provided with dental substances.

8. System according to claim 7, **characterised in that** a plate (34) is inserted into at least one receiving means (32, 33), which plate lies with one end in the receiving means and protrudes with the other end beyond the receiving means, lying on a marginal edge of the front wall (28).

9. System according to claim 8, **characterised in that**, in the vicinity of the marginal edge of the front wall (28), a stopper (36) protrudes into the receiving means (32, 33) from the plate (34).

10. System according to at least one of claims 1 to 9, **characterised in that** the display for accommodating the instruments (2, 9, 10, 44) and/or substances (12, 13) has a tray (24, 24.1).

11. System according to at least one of claims 1 to 10, **characterised in that** the display has a U-shaped basic frame (14), insertable lugs (19.1 to 19.4) being formed from the free marginal edges.

12. System according to claim 11, **characterised in that** the tray (24) can be placed upon the basic frame (14) and has slots (30.1 to 30.4) in the tray base (28), which slots are penetrated by the insertable lugs (19.1 to 19.4) after the tray has been placed upon the basic frame (14).

13. System according to claim 12, **characterised in that** the tray (24) has two lateral walls (25, 26), an upper wall (27) and a front wall (28).

14. System according to claim 12 or 13, **characterised in that** at least one insert (37) for the dental instruments (9, 10, 44) can be placed upon the insertable lugs (19.1 to 19.4) which protrude into the interior of the tray (24) from the slots (30.1 to 30.4) of said tray.

15. System according to claim 14, **characterised in that** the insert (37) overlaps the insertable lugs (19.1 to 19.4) laterally with two lateral walls (38, 40), and overlaps the insertable lugs (19.1 to 19.4) with a rear wall (41) between the upper wall (27) of the tray (24) and said lugs.

16. System according to claim 14 or 15, **characterised in that** the insert (37) has recesses (42, 43.1, 43.2) for retaining the dental instruments (9, 10, 44).

17. System according to one of claims 14 to 16, **characterised in that** the insert (37) has slots (43.1, 43.2) for accommodating feet (45.1, 45.2) of a sterilisable drill stand (44).

18. System according to at least one of claims 10 to 17, **characterised in that** the tray (24.1) is closable by a preferably transparent cover.

19. System according to at least one of claims 1 to 18, **characterised in that** the display can be totally dismantled.

## Revendications

1. Système de traitement d'instruments dentaires (2, 9, 10, 44) et/ou de mélange de substances dentaires (12, 13) disposés dans un présentoir présentant au moins un insert (37), éventuellement échangeable, pour les instruments dentaires (9, 10, 44),
**caractérisé par le fait**
**que** dans le présentoir est intégrée une chambre noire.

2. Système selon la revendication 1, **caractérisé par le fait que** l'insert (37) maintient une distance par rapport à une paroi (28) dans la zone (48) de laquelle se trouve l'aménagement de chambre noire (11).

3. Système selon la revendication 2, **caractérisé par le fait que** dans la zone (48) est placé un tiroir (47), que ce dernier vient en prise par dessous avec l'insert (37) et est guidé latéralement par des pattes enfonçables (19.2, 19.4).

4. Système selon la revendication 3, **caractérisé par le fait que** le tiroir (47) est réalisé recourbé en forme de U inversé, est ouvert vers la paroi frontale (28) d'une coquille (24) et fermé, du côté opposé, par une paroi d'obturation (52).

5. Système selon la revendication 3 ou 4, **caractérisé par le fait que** sur le tiroir (47) est formée une bande de saisie.

6. Système selon la revendication 4 ou 5, **caractérisé par le fait que** le tiroir (47), la zone (48) de la coquille (24) recouverte par le tiroir et la zone correspondante de la paroi frontale (28) sont réalisés en un matériau opaque et/ou sont équipés d'un revêtement opaque.

7. Système selon au moins l'une des revendications 1 à 6, **caractérisé par le fait qu'**il est formé dans la coquille (24), de préférence, d'un côté ou des deux côtés, outre l'insert (37) ou les pattes enfonçables (19.1 à 19.4), des évidements de réception (32, 33) des instruments dentaires (2) et/ou des récipients (12, 13) à masses dentaires.

8. Système selon la revendication 7, **caractérisé par le fait que** dans au moins un évidement de réception (32, 33) est placée une plaque (34) qui, d'une part, se trouve dans l'évidement de réception et, d'autre part, s'élève par-dessus l'évidement de réception, en reposant sur un bord de la paroi frontale (28).

9. Système selon la revendication 8, **caractérisé par le fait que**, près du bord de la paroi frontale (28), un arrêtoir (36) pénètre de la plaque (34) dans l'évidement de réception (32, 33).

10. Système selon au moins l'une des revendications 1 à 9, **caractérisé par le fait que** le présentoir destiné à recevoir les instruments (2, 9, 10, 44) et/ou les substances (12, 13) présente des coquilles (24, 24.1).

11. Système selon au moins l'une des revendications 1 à 10, **caractérisé par le fait que** le présentoir présente un bâti de base en U (14), dans les bords libres étant formées des pattes enfonçables (19.1 à 19.4).

12. Système selon la revendication 11, **caractérisé par le fait que** sur le bâti de base (14) peut être placée la coquille (24) présentant, dans le fond de coquille (25), des fentes (30.1 à 30.4) qui sont percées, après le placement sur le bâti de base (14), par les pattes enfonçables (19.1 à 19,4).

13. Système selon la revendication 12, **caractérisé par le fait que** la coquille (24) présente deux parois latérales (25, 26), une paroi supérieure et une paroi frontale (27, 28).

14. Système selon la revendication 12 ou 13, **caractérisé par le fait qu'**au moins un insert (37) pour les instruments dentaires (9, 10, 44) peut être placé sur les pattes enfonçables (19.1 à 19.4) ressortant des fentes (30.1 à 30.4) de la coquille (24) vers l'intérieur de cette dernière.

15. Système selon la revendication 14, **caractérisé par le fait que** l'insert (37) vient, par deux parois latérales (38, 40), en prise latéralement avec les pattes enfonçables (19.1 à 19.4) et, par une paroi arrière (41) entre la paroi supérieure (27) de la coquille (24) et les pattes enfonçables (19.1 à 19.4), par-dessus celles-ci.

16. Système selon la revendication 14 ou 15, **caractérisé par le fait que** l'insert (37) présente des évidements (42, 43.1, 43.2) destinés à supporter les instruments dentaires (9, 10, 44).

17. Système selon l'une des revendications 14 à 16, **caractérisé par le fait que** l'insert (37) présente des fentes (43.1, 43-2) destinées à recevoir les pattes (45.1, 45.2) d'un porte-fraise stérilisable (44).

18. Système selon au moins l'une des revendications 10 à 17, **caractérisé par le fait que** la coquille (24.1) peut être obturée par un couvercle, de préférence, transparent.

19. Système selon au moins l'une des revendications 1 à 18, **caractérisé par le fait que** le présentoir est totalement démontable.
